# EUROPEAN PATENT APPLICATION

(11) **EP 4 640 763 A1**
(43) Date of publication of application: **29.10.2025**
(21) Application number: 23906583.2
(22) Date of filing: 22.11.2023
(51) Int. Cl.: C08L 71/02, C08J 3/03, C08K 3/34, C08K 9/04

(54) **EMULSION COMPOSITION AND PRODUCTION METHOD THEREFOR**

(30) Priority: 20.12.2022 JP 2022203502
(71) Applicant: Kaneka Corporation, Osaka-shi, Osaka 530-8288 (JP); BYK-Chemie GmbH, 46483 Wesel (DE)
(72) Inventor: VANDEBRIL, Steven, B2260 Westerlo-Oevel (BE); HARUMASHI, Tatsuro, B2260 Westerlo-Oevel (BE); POTTER, Chris, 46483 Wesel (DE); GRANT, Neil, 46483 Wesel (DE); JENNESS, Patrick, 46483 Wesel (DE); AUSTERMANN, Tobias, 46483 Wesel (DE)
(74) Representative: Vossius & Partner Patentanwälte Rechtsanwälte mbB
(86) International application number: PCT/JP2023/041920
(87) International publication number: WO 2024/135214

(57) **Abstract**

The problem to be solved is to provide an emulsion composition containing a hydrolyzable silyl group-containing polyoxyalkylene-based polymer that is excellent in long term storage stability, and to provide a simple and convenient method for producing the emulsion composition. The above problem is solved by an emulsion composition containing: (A) a hydrolyzable silyl group-containing polyoxyalkylene-based polymer; (B) water; and (C) a polysaccharide-modified synthetic layered silicate.

## Description

### Technical Field

The present invention relates to an emulsion composition containing a hydrolyzable silyl group-containing polyoxyalkylene-based polymer, and a method for producing the emulsion composition.

### Background Art

As a technology for emulsifying hydrolyzable silyl group-containing polymers, for example, Patent Literature 1 discloses a silylated polymer emulsion containing a silylated polymer, water, nanosilica, and an optional emulsifier.

Also, Patent Literature 2 discloses a reactive emulsion in which a polyether or polyester that has at least one side chain or terminal reactive silicon group in one molecule is dispersed with water with use of a surfactant.

### Citation List

### Patent Literature

Patent Literature 1: Japanese Patent Application Publication, Tokukai, No. 2009-520867
Patent Literature 2: Japanese Patent Application Publication, Tokukaisho, No. 59-006219

### Summary of Invention

### Technical Problem

However, there has been room for improvement from the viewpoint of making a production process simpler and more convenient (e.g., the need for high speed dispersion) in methods for producing the emulsion compositions according to the conventional technologies described in, for example, Patent Literatures 1 and 2. There has also been a problem in the stability of the emulsion compositions that are stored for a long period of time.

Therefore, an object of the present invention is to provide in a simple and convenient manner an emulsion composition that contains a hydrolyzable silyl group-containing polyoxyalkylene-based polymer and that is excellent in long term storage stability, and to provide a method for producing the emulsion composition.

### Solution to Problem

As a result of diligent investigations on means by which the above problems can be solved, the present inventors have found, for the first time, the following: Using a polysaccharide-modified synthetic layered silicate in an emulsion composition containing a hydrolyzable silyl group-containing polyoxyalkylene-based polymer allows the emulsion composition containing a hydrolyzable silyl group-containing polyoxyalkylene-based polymer to be excellent in long term storage stability and makes it possible to obtain the emulsion composition in a simple and convenient manner. This has led to the completion of the present invention.

Accordingly, one aspect of the present invention is an emulsion composition containing: (A) a hydrolyzable silyl group-containing polyoxyalkylene-based polymer; (B) water; and (C) a polysaccharide-modified synthetic layered silicate (hereinafter, referred to as "the present emulsion composition").

Another aspect of the present invention is a method for producing an emulsion composition, the method including a stirring step of mixing and stirring (A) a hydrolyzable silyl group-containing polyoxyalkylene-based polymer, (B) water, and (C) a polysaccharide-modified synthetic layered silicate (hereinafter, referred to as "the present production method").

### Advantageous Effects of Invention

According to one aspect of the present invention, it is possible to provide in a simple and convenient manner an emulsion composition that contains a hydrolyzable silyl group-containing polyoxyalkylene-based polymer and that is excellent in long term storage stability, and to provide a method for producing the emulsion composition.

### Description of Embodiments

Hereinafter, one form of implementing the present invention will be described in detail. Note that, unless otherwise noted herein, "A to B" representing a numerical value range means "A or more and B or less". Also, all of the literatures described herein are hereby incorporated by reference.

### [1. Outline of the Present Invention]

Conventionally, as a technology for emulsifying hydrolyzable silyl group-containing polyoxyalkylene-based polymers, for example, a technology in which a hydrolyzable silyl group-containing polyoxyalkylene-based polymer, a surfactant, and water are mixed and emulsified has been known (for example, Patent Literatures 1 and 2).

In the course of the investigations by the present inventors, it was considered that in the production of an aqueous emulsion containing a hydrolyzable silyl group-containing polyoxyalkylene-based polymer, a condensation reaction of hydrolyzable silyl groups in the hydrolyzable silyl group-containing polyoxyalkylene-based polymer may proceed due to the presence of moisture, and therefore, it is not easy to produce an emulsion that is excellent in long term storage stability.

Then, as a result of the diligent investigations on the means by which the above problems can be solved, the present inventors have succeeded in finding that by allowing an aqueous emulsion composition containing a hydrolyzable silyl group-containing polyoxyalkylene-based polymer to contain a polysaccharide-modified synthetic layered silicate, an emulsion that is excellent in long term storage stability can be produced in a simple and convenient manner.

As used herein, "excellent in long term storage stability" means that when the emulsion composition is stored at 23°C, water and the polymer do not separate from each other for 3 weeks or longer, preferably 4 weeks or longer, and still more preferably 10 weeks or longer.

As described above, a technology for producing in a simple and convenient manner an emulsion that contains a hydrolyzable silyl group-containing polyoxyalkylene-based polymer and that is excellent in long term storage stability has not been known so far, and is extremely useful in a field in which emulsions that contain hydrolyzable silyl group-containing polyoxyalkylene-based polymers are used. A configuration of the present emulsion composition will be described in detail below.

### [2. Emulsion Composition]

As described above, the present emulsion composition contains: (A) a hydrolyzable silyl group-containing polyoxyalkylene-based polymer; (B) water; and (C) a polysaccharide-modified synthetic layered silicate.

Note that "(A) hydrolyzable silyl group-containing polyoxyalkylene-based polymer" may be referred to as "(A) component", "(B) water" as "(B) component", and "(C) polysaccharide-modified synthetic layered silicate" as "(C) component" in the following.

### (2-1. (A) Component)

The present emulsion composition contains a hydrolyzable silyl group-containing polyoxyalkylene-based polymer as the (A) component.

The (A) hydrolyzable silyl group-containing polyoxyalkylene-based polymer is a compound in which the polymer moiety (also referred to as "main chain") of a hydrolyzable silyl group-containing polymer is a polyoxyalkylene. Under specific conditions known to those skilled in the art, the (A) hydrolyzable silyl group-containing polyoxyalkylene-based polymer forms intermolecular siloxane bonds and forms a crosslinked product.

**In** one embodiment of the present invention, the lower limit of the number average molecular weight (Mn) of the (A) component is preferably 1,000 or more, more preferably 3,000 or more, still more preferably 5,000 or more, and most preferably 10,000 or more. The upper limit of the number average molecular weight of the (A) component is preferably 100,000 or less, more preferably 50,000 or less, and still more preferably 30,000 or less. Specifically, the number average molecular weight is preferably 1,000 to 100,000, more preferably 3,000 to 50,000, and still more preferably 5,000 to 30,000. When the number average molecular weight is in the above range, it is easy to prepare an aqueous dispersion of the polymer.

**In** one embodiment of the present invention, the ratio between the weight average molecular weight (Mw) and the number average molecular weight (Mn) (Mw/Mn; molecular weight distribution) of the (A) component is preferably 1.6 or less, more preferably 1.5 or less, still more preferably 1.4 or less, particularly preferably 1.3 or less, and especially preferably 1.2 or less. When the molecular weight distribution is in the above range, the polymer has low viscosity, and it is easy to prepare an aqueous dispersion of the polymer.

In the present specification, weight average molecular weight (Mw) and number average molecular weight (Mn) are the values in terms of standard polystyrene, as measured by gel permeation chromatography (GPC).

### [Hydrolyzable Silyl Group]

The structure of the hydrolyzable silyl group contained in the (A) component is not particularly limited. Hydrolyzable silyl groups normally used in the art may be used.

In one embodiment of the present invention, the hydrolyzable silyl group of the (A) component is represented by the following general formula (1). In one polymer molecule, two or more types of hydrolyzable silyl groups represented by the general formula (1) may be contained.

-Si(R¹)₃₋ₐ(X)ₐ (1)

In the formula, R¹ represents a substituted or unsubstituted hydrocarbon group having 1 to 20 carbon atoms (when substituted, the hydrocarbon group may be substituted with a heteroatom-containing group). When two or more R¹ are present in one hydrolyzable silyl group, the structures of such R¹ may be the same or different from each other. Examples of R¹ include an alkyl group having 1 to 20 carbon atoms, an aryl group having 6 to 20 carbon atoms, and an aralkyl group having 7 to 20 carbon atoms.

X represents a hydroxy group or a hydrolyzable group. Examples of the hydrolyzable group include a hydroxy group, a halogen, an alkoxy group, an acyloxy group, a ketoximate group, an amino group, an amide group, an acid amide group, an aminooxy group, a mercapto group, and an alkenyloxy group. Among these, because of mild hydrolyzability and ease of handling, alkoxy groups such as a methoxy group and an ethoxy group are more preferable, a methoxy group and an ethoxy group are still more preferable, and a methoxy group is particularly preferable.

a is 1, 2, or 3. a is preferably 2 or 3 where condensation forms a network structure to obtain a cured product.

In general, alkoxy groups the number of carbon atoms of which is smaller are more highly reactive. That is, the reactivity becomes lower in the order of a methoxy group, an ethoxy group, and a propoxy group. Utilizing this property makes it possible to determine the specific structure of the hydrolyzable silyl group as appropriate in accordance with a production method for and application of the (A) component.

Specific examples of the hydrolyzable silyl group include a trimethoxysilyl group, a triethoxysilyl group, a triisopropoxysilyl group, a dimethoxymethylsilyl group, a diethoxymethylsilyl group, a diisopropoxymethylsilyl group, a (chloromethyl)dimethoxysilyl group, and a (methoxymethyl)dimethoxysilyl group.

In consideration of the physical properties of the resulting cured product and the ease of obtaining and handling raw material compounds, it is preferable that the hydrolyzable silyl group is a dialkoxysilyl group or a trialkoxysilyl group. In addition, in consideration of a high crosslinking reaction rate, a trialkoxysilyl group is preferable. Among the specific examples mentioned above, one or more selected from a trimethoxysilyl group, a triethoxysilyl group, and a triisopropoxysilyl group are preferable, and a trimethoxysilyl group is more preferable.

The lower limit of the number of hydrolyzable silyl groups contained in one polymer molecule is preferably 0.5 or more, more preferably 1.0 or more, and still more preferably 1.5 or more. The upper limit of the number of hydrolyzable silyl groups contained in one polymer molecule is preferably 5.0 or less, more preferably 4.0 or less, and still more preferably 3.0 or less. Specifically, the number of hydrolyzable silyl groups contained in one polymer molecule is preferably 0.5 to 5.0, more preferably 1.0 to 4.0, and still more preferably 1.5 to 3.0. When the number of hydrolyzable silyl groups is in the above range, sufficient flexibility can be given to a cured product obtained by a condensation reaction of silyl groups.

The distribution of the hydrolyzable silyl group may be in a random manner or in a block manner. The distribution position of the hydrolyzable silyl group may be anywhere in a polymer molecule. Preferably, the distribution position of the hydrolyzable silyl group is included ata terminal or in a vicinity of the terminal of the polymer molecule. More preferably, the distribution position of the hydrolyzable silyl group is localized at the terminal or in the vicinity of the terminal of the polymer molecule. Still more preferably, the hydrolyzable silyl group is present only at the terminal of the polymer molecule. In one embodiment of the present invention, "the vicinity of the terminal of the polymer molecule" indicates a region from each terminal of the polymer molecule to a position P in the polymer molecule, and the weight of the region accounts for 20% by weight or less, 15% by weight or less, or 10% by weight or less of the total weight of the polymer molecule. In one embodiment of the present invention, "localized at the terminal or in the vicinity of the terminal of the polymer molecule" indicates that the number of hydrolyzable silyl groups positioned at the terminal or in the vicinity of the terminal accounts for 70% or more, 80% or more, or 90% or more of the number of hydrolyzable silyl groups contained in the polymer molecule.

For a method for introducing hydrolyzable silyl groups into a polyoxyalkylene-based polymer, any known method may be employed.

### [Polyoxyalkylene]

A polyoxyalkylene structure in the (A) component may be linear or may be branched. Preferably, the polyoxyalkylene structure is a structure derived from polyoxypropylene diol or polyoxypropylene triol.

The polyoxyalkylene-based polymer molecule may be composed of only one type of repeating unit or may contain two or more types of repeating units. Also, one type of polyoxyalkylene-based polymer may be contained, or two or more types of polyoxyalkylene-based polymers may be contained.

Examples of a main chain structure of the polyoxyalkylene-based polymer include a structure having a repeating unit represented by the following general formula (3). In the formula, R² is a divalent alkylene group.

-R²-O- (2)

The structure represented by the general formula (2) preferably accounts for 50% by weight or more, more preferably 70% by weight or more, and still more preferably 90% by weight or more of the total weight of the polyoxyalkylene-based polymer in the (A) component.

A specific structure of R² contained in the general formula (2) is not particularly limited. R² is preferably an alkylene group having 1 to 14 carbon atoms, and more preferably a linear or branched alkylene group having 2 to 4 carbon atoms.

Specific examples of the repeating unit represented by the general formula (2) include -CH₂O-, -CH₂CH₂O-, -CH₂CH(CH₃)O-, -CH₂CH(C₂H₅)O-, -CH₂C(CH₃)₂O-, and -CH₂CH₂CH₂CH₂O-. Among these, -CH₂CH(CH₃)O- is preferable. A glass transition temperature (Tg) of the polyoxyalkylene-based polymer that contains - CH₂CH(CH₃)O- as the repeating unit is easily adjusted to 0°C or lower.

The polyoxyalkylene-based polymer may contain a urethane bond or a urea bond in the main chain structure.

### (Method for Producing Polyoxyalkylene-based Polymer)

As a method for producing the (A) hydrolyzable silyl group-containing polyoxyalkylene-based polymer, the following methods (I) to (III) can be used.
(I) A method in which a hydroxy group-terminated polyoxyalkylene-based polymer is obtained by a method in which a double metal cyanide complex catalyst is used to polymerize an epoxy compound with a hydroxy group-containing initiator, a hydroxy group of the obtained hydroxy group-terminated polyoxyalkylene-based polymer is then converted to a carbon-carbon unsaturated group, and thereafter, a silane compound is added by a hydrosilylation reaction.
(II) A method in which a hydroxy group-terminated polyoxyalkylene-based polymer is obtained by a method in which a double metal cyanide complex catalyst is used to polymerize an epoxy compound with a hydroxy group-containing initiator, and the obtained hydroxy group-terminated polyoxyalkylene-based polymer is reacted with a compound having both a hydrolyzable silyl group and a group that is reactive with a hydroxy group.
(III) A method in which a hydroxy group-terminated polyoxyalkylene-based polymer is reacted with an excessive polyisocyanate compound to obtain an isocyanate group-terminated polymer, which is then reacted with a compound having both a hydrolyzable silyl group and a group that is reactive with an isocyanate group.

Examples of the hydroxy group-containing initiator used in each of the methods (I) and (II) include initiators each having one or more hydroxy groups, such as ethylene glycol, propylene glycol, glycerin, pentaerythritol, polypropylene glycol with a low molecular weight, polyoxypropylene triol, allyl alcohol, methanol, ethanol, propanol, butanol, pentanol, hexanol, polypropylene monoallyl ether, and polypropylene monoalkyl ether.

Examples of the epoxy compound used in each of the methods (I) and (II) include alkylene oxides such as ethylene oxide and propylene oxide, and glycidyl ethers such as methyl glycidyl ether and allyl glycidyl ether. Among these, propylene oxide is preferable.

Examples of the carbon-carbon unsaturated group used in the method (I) include a vinyl group, an allyl group, a methallyl group, and a propargyl group. Among these, an allyl group is preferable.

As a method for converting the hydroxy group to the carbon-carbon unsaturated group in (I), it is preferable to use a method in which an alkali metal salt is allowed to act on the hydroxy group-terminated polymer, which is then reacted with a halogenated hydrocarbon compound having a carbon-carbon unsaturated bond.

Examples of the halogenated hydrocarbon compound used in the method (I) include vinyl chloride, allyl chloride, methallyl chloride, propargyl chloride, vinyl bromide, allyl bromide, methallyl bromide, propargyl bromide, vinyl iodide, allyl iodide, methallyl iodide, and propargyl iodide.

As the hydrosilane compound used in the method (I), trimethoxysilane, triethoxysilane, tris(2-propenyloxy)silane, triacetoxysilane, dimethoxymethylsilane, (chloromethyl)dimethoxysilane, (methoxymethyl)dimethoxysilane, (N,N-diethylaminomethyl)dimethoxysilane, or the like can be used.

The hydrosilylation reaction used in the method (I) is accelerated by various catalysts. As the hydrosilylation catalyst, any known catalyst may be used. For example, the following can be used: a catalyst in which platinum is supported on a carrier such as alumina, silica, or carbon black; chloroplatinic acid; a chloroplatinic acid complex composed of chloroplatinic acid and an alcohol, an aldehyde, a ketone, or the like; a platinum-olefin complex [for example, Pt(CH₂=CH₂)₂(PPh₃) or Pt(CH₂=CH₂)₂Cl₂]; a platinum-vinylsiloxane complex [Pt{(vinyl)Me₂SiOSiMe₂(vinyl)} or Pt{Me(vinyl)SiO}₄]; a platinum-phosphine complex [Ph(PPh₃)₄ or Pt(PBu₃)₄]; a platinum-phosphite complex [Pt{P(OPh)₃}₄]; or the like.

As the compound which has both a hydrolyzable silyl group and a group that is reactive with a hydroxy group and which can be used in the method (II), for example, the following can be used: an isocyanate silane such as 3-isocyanate propyltrimethoxysilane, 3-isocyanate propyldimethoxymethylsilane, 3-isocyanate propyltriethoxysilane, isocyanate methyltrimethoxysilane, isocyanate methyltriethoxysilane, or isocyanate methyldimethoxymethylsilane; a mercaptosilane such as 3-mercaptopropyltrimethoxysilane, 3-mercaptopropyldimethoxymethylsilane, or 3-mercaptopropyltriethoxysilane; an epoxysilane such as 3-glycidoxypropyltrimethoxysilane, 3-glycidoxypropyldimethoxymethylsilane, or 3-glycidoxypropyltriethoxysilane; or the like.

Examples of the polyisocyanate compound that can be used in the method (III) include aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

Examples of the compound which has both a hydrolyzable silyl group and a group that is reactive with an isocyanate group and which can be used in the method (III) include: amino group-containing silanes such as γ-aminopropyltrimethoxysilane, γ-aminopropyldimethoxymethylsilane, γ-aminopropyltriethoxysilane, N-(β-aminoethyl)-y-aminopropyltrimethoxysilane, N-(β-aminoethyl)-y-aminopropyldimethoxymethylsilane, N-(β-aminoethyl)-γ-aminopropyltriethoxysilane, γ-(N-phenyl)aminopropyltrimethoxysilane, γ-(N-phenyl)aminopropyldimethoxymethylsilane, N-ethylaminoisobutyltrimethoxysilane, N-ethylaminoisobutyldimethoxymethylsilane, N-cyclohexylaminomethyltrimethoxysilane, and N-cyclohexylaminomethyldimethoxymethylsilane; hydroxy group-containing silanes such as γ-hydroxypropyltrimethoxysilane and γ-hydroxypropyldimethoxymethylsilane; and mercapto group-containing silanes such as γ-mercaptopropyltrimethoxysilane and γ-mercaptopropyldimethoxymethylsilane.

As the (A) hydrolyzable silyl group-containing polyoxyalkylene-based polymer, a polyoxyalkylene-based polymer having a plurality of hydrolyzable silyl groups at one terminal can also be used. The polyoxyalkylene-based polymer having a plurality of hydrolyzable silyl groups at one terminal is synthesized as follows: (i) a hydroxy group-terminated polyoxyalkylene-based polymer is obtained by a method in which a double metal cyanide complex catalyst is used to polymerize an epoxy compound with a hydroxy group-containing initiator; (ii) a polyoxyalkylene-based polymer having a plurality of carbon-carbon unsaturated groups at one terminal is obtained by allowing an alkali metal salt to act on a hydroxy group of the obtained hydroxy group-terminated polyoxyalkylene-based polymer, subsequently reacting the polymer with allyl glycidyl ether, further allowing an alkali metal salt to act on a hydroxy group terminal thus produced, and then reacting the polymer with a halogenated hydrocarbon compound having a carbon-carbon unsaturated bond; and (iii) a silane compound is added by a hydrosilylation reaction to the obtained polyoxyalkylene-based polymer having a plurality of carbon-carbon unsaturated groups at one terminal.

### (2-2. (B) Component)

The present emulsion composition contains water as the (B) component. The water functions as a solvent that cooperates with the (C) component to dissolve the (A) component and form an emulsion.

The weight ratio between the (A) component and the (B) component in the present emulsion composition is preferably 20:80 to 80:20, more preferably 30:70 to 70:30, and still more preferably 60:40 to 40:60. When the weight ratio between the (A) component and the (B) component in the present emulsion composition is 20:80 to 80:20, the effect is brought about that the resulting emulsion is stable.

As the (B) component, it is preferable to use water containing NaCl, more preferable to use an aqueous NaCl solution with a concentration of 0.001 mol/L to 0.1 mol/L, and still more preferable to use an aqueous NaCl solution with a concentration of 0.005 mol/L to 0.05 mol/L.

### (2-3. (C) Component)

The present emulsion composition contains a polysaccharide-modified synthetic layered silicate as the (C) component. When the present emulsion composition contains the (C) component, the hydrolyzable silyl group-containing polyoxyalkylene-based polymer and water can form a stable emulsion, and an emulsion containing the hydrolyzable silyl group-containing polyoxyalkylene-based polymer can be formed in a simple and convenient manner. In addition, the resulting emulsion is excellent in long term storage stability.

Examples of the polysaccharide include xanthan gum, carrageenan, pectin, gum arabic, guar gum, tamarind gum, and tragacanth gum. Among these, xanthan gum described in J. Soc. Cosmet. Chem, 32, 275-285 is more preferable.

Examples of the synthetic layered silicate include silicate obtained by reacting sodium silicate with a sodium-magnesium salt and with lithium. The synthetic layered silicate is produced by, for example, hydrothermal synthesis or a melting method.

The size of the polysaccharide-modified synthetic layered silicate is, for example, 5 nm or more, preferably 20 nm or more, and still more preferably 25 nm or more as the primary average particle diameter. The upper limit value of the size of the polysaccharide-modified synthetic layered silicate is, for example, 50 nm or less, and preferably 30 nm or less as the primary average particle diameter. When the size of the polysaccharide-modified synthetic layered silicate is in the range of 5 nm or more and 50 nm or less, the condensation reaction of hydrolyzable silyl groups in the hydrolyzable silyl group-containing polymer due to the presence of moisture can be suppressed, and an emulsion that is excellent in long term storage stability can be formed. Note that the primary average particle diameter of the synthetic layered silicate is calculated as the average of D50 values determined by an atomic force microscope in accordance with ASTM E2859-11.

The content of the (C) component in the present emulsion composition is preferably 0.1 parts by weight to 20 parts by weight, more preferably 0.5 parts by weight to 15 parts by weight, still more preferably 1.0 part by weight to 12 parts by weight, and particularly preferably 1.5 parts by weight to 10 parts by weight with respect to 100 parts by weight of the (A) component. When the content of the (C) component in the present emulsion composition is 0.1 parts by weight to 20 parts by weight, a uniform emulsion composition can be obtained. Note that, when the content of the (C) component is 20 parts by weight or less, stirring can be easily performed, and thus the emulsion composition can be obtained in a simple and convenient manner.

### (2-4. Other Component(s))

In the present emulsion composition, a component(s) other than the components mentioned above may be contained as appropriate, depending on the purpose. Examples of such a component(s) include a condensation catalyst that cures the (A) component, a filler other than the (C) component, an antioxidant, a photostabilizer, an ultraviolet absorber, a water-soluble resin, a solvent, a plasticizer, a defoaming agent, a leveling agent, a dispersing agent, a film foaming aid, a coupling agent, a coloring agent, a water resistant agent, a cold resistant agent, a waterproofing agent, an antirust agent, a setting modifier, a lubricant, a pH regulator, a preservative, an inorganic pigment, an organic pigment, a surfactant, a crosslinking agent, an epoxy-based compound, a polyvalent metal compound, an isocyanate-based compound, glass fibers, and chemical fibers.

### [3. Method for Producing Emulsion Composition]

In one embodiment of the present invention, provided is a method for producing an emulsion composition, the method including a stirring step of mixing and stirring (A) a hydrolyzable silyl group-containing polyoxyalkylene-based polymer, (B) water, and (C) a polysaccharide-modified synthetic layered silicate. In the present production method, by using the (C) polysaccharide-modified synthetic layered silicate, an emulsion composition containing the hydrolyzable silyl group-containing polyoxyalkylene-based polymer can be produced in a simple and convenient manner.

In the stirring step, the amount of the (C) component to be mixed with 100 parts by weight of the (A) component is preferably 0.1 parts by weight to 20 parts by weight, more preferably 0.5 parts by weight to 15 parts by weight, still more preferably 0.75 parts by weight to 12 parts by weight, and particularly preferably 1.0 part by weight to 10 parts by weight. When the amount of the (C) component to be mixed is 0.1 parts by weight to 20 parts by weight, a uniform emulsion composition can be obtained. Note that, when the amount of the (C) component to be mixed is 20 parts by weight or less, stirring can be easily performed, and thus the emulsion composition can be obtained in a simple and convenient manner.

When the other component(s) listed above is/are added to the present emulsion composition, the component(s) may be added at the same time as the (A), (B), and (C) components and mixed or may be mixed after the (A), (B), and (C) components are mixed to fabricate an emulsion.

In the present production method, a method for mixing and stirring the (A) component, the (B) component, and the (C) component is not particularly limited, and the (A) component, the (B) component, and the (C) component are mixed and stirred by any method used in the art. For example, the (A) component, the (B) component, and the (C) component may be mixed and stirred at the same time, or any two components may be mixed and stirred first, and then the remaining one component may be added, so that the resulting mixture may be further mixed and stirred. As described in Examples, it is preferable to mix the (B) component with the (C) component, then mix the mixed (B) and (C) components with the (A) component, and stir the resulting mixture. According to the embodiment described above, there is an advantage of making it possible to achieve uniformization in a short time.

An apparatus for mixing and stirring the (A) component, the (B) component, and the (C) component is not particularly limited either, and for example, a mixer, a mechanical stirrer, a homogenizer, an ultrasonic homogenizer, or the like is used.

In one embodiment of the present invention, in the stirring step, the rotation speed of a stirring apparatus is preferably 200 rpm to 5,000 rpm, more preferably 500 rpm to 4,000 rpm, and still more preferably 1,000 rpm to 3,000 rpm. When the rotation speed of the stirring apparatus is in the above range, mixing can be performed sufficiently.

In one embodiment of the present invention, in the stirring step, stirring time is preferably 1 minute to 60 minutes, more preferably 2 minutes to 50 minutes, and still more preferably 3 minutes to 40 minutes. In the present production method, an emulsion composition containing the hydrolyzable silyl group-containing polyoxyalkylene-based polymer can be produced even in a shorter stirring time as compared with the conventional technologies.

In one embodiment of the present invention, in the stirring step, stirring temperature is preferably 5°C to 80°C, more preferably 10°C to 60°C, and still more preferably 15°C to 50°C. In the present production method, an emulsion composition containing the hydrolyzable silyl group-containing polyoxyalkylene-based polymer can be produced even at a lower stirring temperature as compared with the conventional technologies.

In the present production method, the descriptions in the above section [2. Emulsion Composition] are applied to the "(A) component", "(B) component", and "(C) component".

### [4. Applications of Emulsion Composition]

An emulsion of the present invention can be used for, for example, paints, inks, mold release agents, adhesives, pressure-sensitive adhesives, sealing materials, coating materials, cosmetics, and the like.

The present invention is not limited to the embodiments mentioned above, but can be altered by a skilled person in the art within the scope of the claims. The present invention also encompasses, in its technical scope, any embodiment derived by combining technical means disclosed in differing embodiments.

That is, one aspect of the present invention includes the following.
<1> An emulsion composition containing: (A) a hydrolyzable silyl group-containing polyoxyalkylene-based polymer; (B) water; and (C) a polysaccharide-modified synthetic layered silicate.
<2> The emulsion composition according to <1>, wherein the (C) component is 0.1 parts by weight to 20 parts by weight with respect to 100 parts by weight of the (A) component.
<3> The emulsion composition according to <1> or <2>, wherein the (C) component is 1.5 parts by weight to 10 parts by weight with respect to 100 parts by weight of the (A) component.
<4> The emulsion composition according to any one of <1> to <3>, wherein a weight ratio between the (A) component and the (B) component is 20:80 to 80:20.
<5> A method for producing an emulsion composition, the method including a stirring step of mixing and stirring (A) a hydrolyzable silyl group-containing polyoxyalkylene-based polymer, (B) water, and (C) a polysaccharide-modified synthetic layered silicate.
<6> The method for producing an emulsion composition according to <5>, wherein 0.1 parts by weight to 20 parts by weight of the (C) component is mixed with 100 parts by weight of a total of the (A) component in the stirring step.
<7> The method for producing an emulsion composition according to <5> or <6>, wherein in the stirring step, a rotation speed of a stirring apparatus is 200 rpm to 5,000 rpm, and a stirring time is 1 minute to 60 minutes.
<8> The method for producing an emulsion composition according to any one of <5> to <7>, wherein in the stirring step, the (C) component is mixed with the (B) component and then mixed with the (A) component, and a resulting mixture is stirred.

### Examples

Hereinafter, the present invention will be described in more detail with reference to Examples. However, the present invention is not limited to these Examples.

### [Materials]

The materials used in Examples and Comparative Examples are as follows.
<(A) Component>
   Polymer (A-1): hydrolyzable silyl group-containing polyoxyalkylene-based polymer produced on the basis of Synthesis Example 1 below
<(B) Component>
   Water (an aqueous NaCl solution with a concentration of 0.01 mol/L)
<(C) Component>
   Silicate 1: xanthan gum-modified synthetic layered silicate (Produced by the method described in J. Soc. Cosmet. Chem, 32, 275-285. The synthetic layered silicate was obtained by reacting sodium silicate with a sodium-magnesium salt and with lithium. The primary average particle diameter was 25 nm.)

### <Other layered filler>

Silicate 2: synthetic layered silicate (The synthetic layered silicate was obtained by reacting sodium silicate with a sodium-magnesium salt and with lithium (without modification due to a polysaccharide)). The primary average particle diameter was 25 nm.

The number average molecular weight in Examples (Synthesis Example 1) is the GPC molecular weight measured under the following conditions:
· Solution sending system: HLC-8220GPC available from Tosoh Corporation · Column: TSKgel SuperH series available from Tosoh Corporation · Solvent: THF
· Molecular weight: in terms of polystyrene
· Measurement temperature: 40°C.

### (Synthesis Example 1)

A synthesis example of the polymer (A-1) is shown below.

Propylene oxide was polymerized with use of polyoxypropylene triol with a number average molecular weight of about 4,500 as an initiator and a zinc hexacyanocobaltate glyme complex catalyst. Thus obtained was polyoxypropylene (P-1), which had hydroxy groups at terminals and which had a number average molecular weight of 16,400 and a molecular weight distribution Mw/Mn of 1.3. Subsequently, 1.2 molar equivalents of sodium methoxide with respect to the hydroxy groups of the obtained hydroxy group-terminated polyoxypropylene (P-1) was added as a 28% methanol solution. Methanol was then removed by vacuum devolatilization. Thereafter, 1.5 molar equivalents of allyl chloride with respect to the hydroxy groups of the polymer (P-1) was further added to convert the hydroxy groups at the terminals to allyl groups. Then, unreacted allyl chloride was removed by devolatilization under reduced pressure. The obtained unpurified polyoxypropylene was mixed with n-hexane and water, and stirring was carried out. The water was then removed by centrifugal separation. The hexane was devolatilized from the obtained hexane solution under reduced pressure to remove a metal salt in the polymer. In this manner, polyoxypropylene (Q-1), which had the allyl groups at the terminals, was obtained. To 500 g of this polymer (Q-1), 50 µL of a platinum-divinyldisiloxane complex solution (3 wt% isopropanol solution in terms of platinum) was added. While the obtained solution was stirred, 14.7 g of trimethoxysilane was slowly dropped into the solution. After a 2-hour reaction at 100°C, unreacted trimethoxysilane was distilled off under reduced pressure. Thus obtained was polyoxypropylene (A-1), which had triethoxysilyl groups at terminals and which had a number average molecular weight of about 16,400. It was found that the polymer (A-1) had 0.7 trimethoxysilyl groups on average at one terminal and 2.2 trimethoxysilyl groups on average in one molecule.

### (Examples 1 and 2, and Comparative Examples 1 and 2)

The (B) component and the (C) component or other layered silicate were added to a mixing vessel in the amounts listed in Table 1 and were mixed, and then the (A) component was added to obtain a mixture. The obtained mixture was mixed at 2,000 rpm for 10 minutes at 25°C with use of a mechanical stirrer to obtain mixtures of Examples 1 and 2, and Comparative Examples 1 and 2. For the obtained mixtures, the state of emulsions was evaluated according to the criteria shown below. Furthermore, the state after storage at 23°C was evaluated according to the criteria shown below. The results are shown in Table 1.

### (Evaluation Criteria)

State of emulsion at the time of fabrication
A: uniform state
B: not uniform

State after storage
A: no separation
B: small amount of water separated
C: water and polymer separated

**[Table 1]**

| | | Example 1 | Example 2 | Comparative Example 1 | Comparative Example 2 |
|---|---|---|---|---|---|
| (A) component (parts by weight) | A-1 | 100 | 100 | 100 | 100 |
| (B) component (parts by weight) | Water* | 100 | 100 | 100 | 100 |
| (C) component (parts by weight) | Silicate 1 | 1.0 | 2.0 | - | - |
| Other layered silicate | Silicate 2 | | | 1.0 | 2.0 |
| State of emulsion at the time of fabrication | | A | A | B | A |
| State after storage | After 1 week | A | A | - | A |
| | After 2 week | A | A | - | A |
| | After 3 week | A | A | - | C |
| | After 4 week | B | A | - | - |
| | After 10 week | B | A | - | - |

| | | | | | |
|---|---|---|---|---|---|
| *: Aqueous NaCl solution with a concentration of 0.01 mol/L | | | | | |

### [Results]

Examples 1 and 2, each of which used polysaccharide-modified synthetic layered silicate serving as the (C) component, produced emulsions that were stable for a longer period of time, as compared with Comparative Examples 1 and 2, each of which used the layered silicate that was not the (C) component.

In addition, the emulsion of Comparative Example 1 was not uniform when produced, while the emulsion of Comparative Example 2, in which the amount of silicate used was doubled, was uniform when produced. In contrast, the emulsion of Example 1 was uniform, although the amount of silicate used was the same as in the emulsion of Comparative Example 1. Accordingly, it was shown that the silicate serving as the (C) component can stabilize emulsions even when used in a small amount, as compared with other silicates (for example, the silicates used in Comparative Examples 1 and 2).

Furthermore, Example 1, in which the amount of the (C) component added was 1.0 part by weight, maintained the state of the emulsion, but a small amount of water began to be separated after 4 weeks, whereas Example 2, in which the amount of the (C) component added was 2.0 parts by weight, still produced a stable emulsion composition even after 10 weeks. Accordingly, it was found that by increasing the amount of the (C) component used, the emulsion composition can remain stable for a longer period of time.

### Industrial Applicability

The present emulsion composition can provide in a simple and convenient manner an emulsion composition that contains a hydrolyzable silyl group-containing polyoxyalkylene-based polymer and that can be stored for a long period of time, and therefore can be suitably used in the fields of, for example, paints, inks, mold release agents, adhesives, pressure-sensitive adhesives, sealing materials, coating materials, cosmetics, and the like.

## Claims

1. An emulsion composition comprising:
(A) a hydrolyzable silyl group-containing polyoxyalkylene-based polymer;
(B) water; and
(C) a polysaccharide-modified synthetic layered silicate.

2. The emulsion composition according to claim 1, wherein the (C) component is 0.1 parts by weight to 20 parts by weight with respect to 100 parts by weight of the (A) component.

3. The emulsion composition according to claim 1, wherein the (C) component is 1.5 parts by weight to 10 parts by weight with respect to 100 parts by weight of the (A) component.

4. The emulsion composition according to any one of claims 1 to 3, wherein a weight ratio between the (A) component and the (B) component is 20:80 to 80:20.

5. A method for producing an emulsion composition, the method comprising a stirring step of mixing and stirring (A) a hydrolyzable silyl group-containing polyoxyalkylene-based polymer, (B) water, and (C) a polysaccharide-modified synthetic layered silicate.

6. The method for producing an emulsion composition according to claim 5, wherein 0.1 parts by weight to 20 parts by weight of the (C) component is mixed with 100 parts by weight of the (A) component in the stirring step.

7. The method for producing an emulsion composition according to claim 5, wherein in the stirring step, a rotation speed of a stirring apparatus is 200 rpm to 5,000 rpm, and a stirring time is 1 minute to 60 minutes.

8. The method for producing an emulsion composition according to any one of claims 5 to 7, wherein in the stirring step, the (C) component is mixed with the (B) component and then mixed with the (A) component, and a resulting mixture is stirred.
